# EUROPÄISCHE PATENTANMELDUNG

(11) **EP 0 879 664 A1**
(43) Veröffentlichungstag der Anmeldung: **25.11.1998**
(21) Anmeldenummer: 97106764.0
(22) Anmeldetag: 24.04.1997
(51) Int. Cl.: B23H 7/08

(54) **Drahtelektrode zum funkenerosiven Schneiden sowie Verfahren zu deren Anwendung**

(71) Anmelder: CHARMILLES TECHNOLOGIES S.A., 1217 Meyrin 1 (CH)
(72) Erfinder: Wälder, Georg, 1214 Vernier (CH); Balleys, François, 1242 Satigny (CH)
(74) Vertreter: Szilagyi, Marianne

(57) **Zusammenfassung**

Die Erfindung bezieht sich auf eine Drahtelektrodenanordnung zum funkenerosiven Schneiden und auf ein Verfahren zu deren Anwendung. Um die Schneidgeschwindigkeit zu erhöhen, besteht die Elektrode aus mehreren Einzelelektroden, welche jeweils mit einer voneinander unabhängigen Strom- und Spannungsquelle verbunden werden. Im wesentlichen besteht die Drahtelektrode aus zwei nahezu zueinander parallel gestreckten und verdrillten Drähten, welche gegeneinander isoliert sind oder aus einer isolierenden Drahtseele auf welcher einzelne leitende, von einander jedoch isolierte Glieder aufgebracht sind.

## Beschreibung

Die Erfindung bezieht sich auf eine Drahtelektrodenanordnung zum funkenerosiven Schneiden und auf ein Verfahren zu deren Anwendung. Beim funkenerosiven Schneiden wird der Effekt ausgenutzt, dass zwischen der Elektrode und einem zu bearbeitenden leitenden Werkstück ein Spannungspotential vorhanden ist, welches zu Funkenüberschlägen führt, welche zum Materialabtrag beim zu bearbeitenden Werkstück führen. Derartige Verfahren sind aus dem Stand der Technik bekannt.

Nach den üblichen Prinzipien des funkenerosiven Schneidens besteht die Elektrode aus einem einzigen, durchgängig leitendem Draht. Die Schneidegeschwindigkeit ist durch die Anzahl der Entladungen pro Zeiteinheit und der Energie jeder Entladung (d.h. maximale Stromdichte) begrenzt, da lokale Ueberhitzungen des Drahtes zu Drahtbrüchen führen können.

In verschiedenen Patenten wie z.B. US-5196665 oder US-4740666 werden Verfahren beschrieben, bei denen eine elektrisch leitende Seele eines Drahtes bestehend aus einer Legierung mit einer oder mehreren Schichten verschiedener Materialen beschichtet wird, vorzugsweise aus Metallen mit niedrigen Schmelz- und Verdampfungstemperaturen und guter elektrischer Leitfähigkeit, wie etwa Zink. Dadurch kann eine Drahtseele mit hoher Zugfestigkeit erhalten werden, welche vor möglichen Drahtbrüchen durch die als Hitzeschild wirkenden Beschichtung zusätzlich geschützt wird. Dies erlaubt den Betrieb mit hohen Stromdichten und somit einer Erhöhung der Bearbeitungsgeschwindigkeit. Diese Vorgehensweisen haben nach F.Dauw (ISEM-X) zu mehr als einer Verdopplung der Schneidegeschwindigkeit (zwischen 1986-1990) geführt. Allerdings ist eine Steigerung allein gemäss obigen Verfahrens kaum weiter möglich.

Eine andere in der Senkerosion bekannte Lösungsmöglichkeit für das zugrundeliegende Problem der Steigerung der Arbeitsgeschwindigkeit liegt in der gleichzeitigen Verwendung mehrerer Elektroden. Pro Zeiteinheit können somit an verschiedenen Positionen Entladungungen stattfinden. Die Anwendung von mehreren Elektroden bei der Drahtschneiderosion wurde in EP-0433747 dargestellt. Die dabei gestellte Aufgabe betrifft jedoch das Schneiden nichtleitender Materialien. Hierzu befinden sich sowohl Kathode als auch Anode auf einer drahtförmigen Anordnung, so dass die Entladung zwischen den Elektroden der Drahtanordnung stattfinden, nicht jedoch zwischen dieser und dem Werkstück. Die Geometrie der Anordnung ist daher nicht für die gewünschte Bearbeitungsart geeignet, mehrere gleichzeitige Entladungen sind nicht möglich.

Der Erfindung liegt die Aufgabe zugrunde, eine Drahtelektrodenanordnung zum funkenerosiven Schneiden sowie ein Verfahren zu deren Anwendung zu schaffen, welche bei einfachem Aufbau und einfacher Anwendbarkeit die Erhöhung der Geschwindigkeit des funkenerosiven Schneidens ermöglicht.

Hinsichtlich der Drahtelektrodenanordnung wird die Aufgabe dadurch gelöst, dass mindestens eine erste gegen eine weitere von dieser isolierte Elektrode verwendet wird, welche jeweils mit einer voneinander unabhängige Strom- und Spannungsquelle verbunden wird. Durch eine entsprechende Steuerung werden die Entladungen an jeder Elektrode überwacht und der Vorschub der Drahtelektrodenanordnung gesteuert. Die Drahtelektrode kann aus mindestens zwei nahezu zueinander gestreckten im wesentlichen parallelen Drähten bestehen, welche gegeneinander isoliert und verdrillt sind. Eine weitere Lösungsmöglichkeit besteht in einer Anordnung von leitenden Schichtgliedern, welche gegeneinander isoliert sind und die auf einer nichtleitenden (oder mit nichtleitendem Material beschichteten) Drahtseele aufgebracht sind.

Die erfindungsgemässe Anordnung zeichnet sich durch eine Reihe erheblicher Vorteile aus. Da erfindungsgemäss mehrere Elektroden auf eine Drahtanordnung aufgebracht sind, können vor allem bei grösseren Werkstückdicken gleichzeitig mehrere Entladungen stattfinden, wodurch die Schnittgeschwindigkeit entsprechend erhöht wird.
Weiterhin ist erfindungsgemäss von Vorteil, dass nur eine einzige Drahtanordnung verwendet wird, auf welche mehrere Elektroden aufgebracht sind. Somit kann auf aufwendige Führungseinrichtungen verzichtet werden, so dass diese Drahtanordnungen im wesentlichen auf bekannten Funkenerosionsmaschinen einsetzbar sind, welche entsprechend mit mehreren Stromquellen und entsprechender Steuerung versehen sind. Umgekehrt kann auf einer derart modifizierten Maschine ohne Probleme mit konventionellen Drähten gearbeitet werden.

Ein weiterer Vorteil der Erfindung stellt sich in der nicht glatten Oberfläche der Drahtordnung dar. Die Wendelung als auch die Unterbrechungen einzelner Glieder ergeben den Vorteil, dass Partikel aus dem Schneidespalt gefördert werden, so dass im Bereich des Schnittvorganges stets nicht-verunreinigtes Dielektrikum nachströmen kann. Dies führt insbesondere bei sehr schmalen Bearbeitungsspalten zu einer Erhöhung der Schnittgeschwindigkeit. Auch wird der Wärmetransfer zwischen Draht und Dielektrikum dadurch verbessert, was in einem verminderten Drahtbruchrisiko resultiert.

Weiterhin ist erfindungsgemäss von Vorteil, dass bei gleicher Schnittgeschwindigkeit gegenüber einem konventionellen Draht sowohl mit geringeren Entladeströmen gearbeitet werden kann als auch die Kapazitäten der einzelnen Drahtsegmente kleiner sind, wobei beides zu einer besseren Oberflächenqualität des Werkstücks führt.

Das erfindungsgemässe Lösungsprinzip ermöglicht vielfältige Ausgestaltungsvarianten der Drahtelektrodenanordnung. In einer ersten Ausführungsmöglichkeit ist vorgesehen, dass auf eine nichtleitende Drahtseele, beispielsweise einem silikatischen Werkstoff wie Glas, eine umhüllende leitende Mantelschicht aufgebracht wird. Diese Mantelschicht ist in regelmässigen Abständen unterbrochen, so dass sich gliederkettenartige Aufreihung leitender Mantelschichtglieder ergibt. In einer Ausgestaltungsvariante dieses Prinzips besteht die Seele aus einem leitenden Draht, welche zunächst vollkommen von einer isolierten Schicht bedeckt ist, auf welche dann die leitenden Glieder aufgebracht sind. Die Stromzufuhr zu den einzelnen Gliedern erfolgt mit Hilfe von Schleifkontakten, welche ober- und unterhalb des zu bearbeitenden Werkstücks angebracht sind. Dabei entspricht der Abstand der Kontakte etwa der Länge der einzelnen Glieder. Dadurch wird sichergestellt, das während des Drahtablaufs bis auf kurze Abschnitte der Bewegung stets zwei voneinander isolierte Glieder elektrischen Kontakt besitzen und sich in dem Arbeitsbereich zwischen den Kontakten befinden.

Alternativ zu dem oben geschilderten Lösungsprinzip, kann es auch günstig sein, dass die Drahtelektrodenanordnung aus mindestens zwei nahezu zueinander gestreckten, im wesentlichen parallelen Drähten besteht, welche gegeneinander isoliert und verdrillt sind. Zur Vermeidung eines Kurzschlusses zwischen den Elektroden des Drahtes, welcher normalerweise auf einer Rolle aufgewickelt ist, ist es notwendig, dass bis auf eine Elektrode alle vollkommen mit einer isolierenden Lackschicht bedeckt sind, welche nahe den äusseren Kontakten wieder entfernt wird. Dabei ist es in besonders wirtschaftlicher Weise möglich, Lackdrähte aus Kupfer oder anderen Legierungen zu verwenden. Durch die Ausgestaltung einer nachgeordneten Schabdüse ist es möglich, gezielt für bestimmte Umfangsbereiche die isolierende Lackschicht zu entfernen, um die gewünschten Entladungbereiche zu schaffen. Dabei sind die einzelnen Drahtelektroden an ihrer Isolierschicht entweder direkt miteinander verklebt oder verschweisst, oder über eine zusätzliche Isolierschicht miteinander verbunden. Mittels Schleifkontakten, werden die einzelnen Drähte mit den jeweiligen Strom- und Spannungsquellen verbunden. Die Verdrillung der Elektroden erfolgt dann während des Abspulens des Drahtes durch eine geeignete Führung. Dabei ist zwischen einer oberen, starren Führung und einer unteren, drehbaren Lagerung der Führung zu unterscheiden. Die starre Führung verhindert ein Verdrillen des Bandes oder Mehrfachdrahtes im Bereich der Schleifkontakte. Die drehbare Lagerung ermöglicht eine Anpassung der Verdrillung an eine geänderte Arbeitshöhe etwa bei grösseren Werkstückdicken.

Alternativ zu den bereits geschilderten Ausführungen, kann es besonders günstig sein, wenn die Drahtelektrodenanordnung aus einem bandförmigen Isolator besteht. Auf einer der Aussenflächen des Bandes sind in Längsrichtung mehrere voneinander getrennte streifenförmige Elektroden aufgebracht. Während des Abspulens wird das Band so verdrillt, dass die Streifenelektroden bei der entstehenden Wendelung nach aussen gerichtet sind.

Erfindungsgemäss ist somit die Möglichkeit geschaffen, eine drahtförmige Elektrodenanordnung herzustellen, welche die gleichzeitige Bearbeitung eines Werkstücks mit mehreren Elektroden erlaubt. Daraus resultiert eine grössere Schneidegeschwindigkeit gegenüber einem konventionellen, ein-elektrodenartigen Draht, bzw. eine bessere Oberflächenqualität bei gleicher Schnittgeschwindigkeit.

Im folgenden wird die Erfindung anhand von Ausführungsbeispielen in Verbindung mit der Zeichnung beschrieben.

Dabei zeigt:
- Fig. 1: eine schematische Darstellung einer funkenerosiven Schnittanordnung,
- Fig. 2: eine schematische, (perspektiviache) Ansicht eines ersten Ausführungsbeispiels der erfingungsgemässen Anordnung in Form einer gliederkettenartigen Schnur,
- Fig. 3: eine schematische Darstellung des Arbeitsprinzips mit mehreren Elektroden,
- Fig. 4: eine Darstellung des Arbeitsablaufs der Anordnung gemäss Fig. 3,
- Fig. 5: schematische Ansichten weiterer Ausführungsbeispiele in Form mehrerer miteinander verbundener Drähte.
- Fig. 6: eine schematische, perspektivische Ansicht eines Ausführungsbeispiels in Form einer Verdrillung eines mit leitenden Streifen beschichteten Bandes

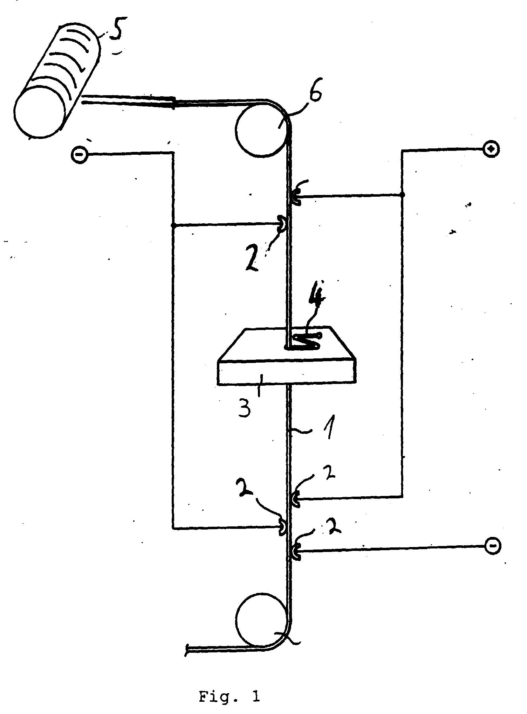

In Fig. 1 ist eine schematische Darstellung der erfindungsgemässen Funkenerosionsanordnung gezeichnet. Diese umfasst ein Werkstück 3 aus einem leitenden Material, in welches eine Schnittfuge 4 eingebracht wird. Die gesamte Anordnung ist in üblicher Weise dem Stand der Technik entsprechend zumindest im Bereich der Funkenerosionszone in einem Dielektrikum angeordnet. Die Drahtelektrode 1 wird von einer Vorratsrolle 5 über Umlenkrollen 6 durch das Werkstück geführt. Gemäss dem Stand der Technik ist üblicherweise das Werkstück mit dem Erdpotential verbunden. Die Schleifkontakte 2 dienen dem Anschluss eines Plus- oder Minuspotentials einer Quelle.

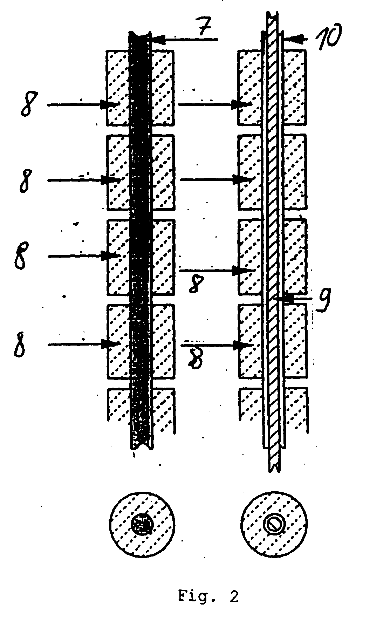

Die Fig. 2 zeigt eine vergrösserte Ansicht eines ersten Ausführungsbeispiels einer erfingungsgemässen Drahtelektrode. Die Drahtelektrode ist dabei in Form einer gliederkettenartigen Schnur aufgebaut. Auf der linken Bildhälfte ist eine Anordnung dargestellt, derart, dass auf eine nichtleitende Seele 7, welche beispielsweise aus Quarzglas oder Kunststoff bestehen kann, Glieder aus elektrisch leitendem Material 8 aufgebracht sind, welche aufgrund von Lücken voneinander isoliert sind. Auf der rechten Bildhälfte ist eine Anordnung dargestellt, derart, dass auf eine leitende Seele 9, beispielsweise einem konventionellen Draht, eine Isolationsschicht 10 aufgebracht ist. Auf diese Schicht sind wiederum die Glieder aus elektrisch leitendem Material aufgebracht, welche aufgrund von Lücken voneinander isoliert sind. Der Querschnitt der jeweiligen Anordnung ist im unteren Bildbereich rechts bzw. links dargestellt.

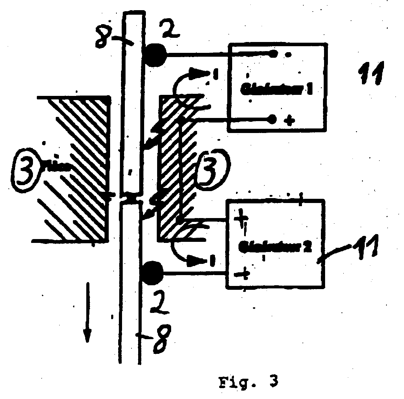

In Fig. 3 ist eine schematische Darstellung des Arbeitsprinzips mit mehreren Elektroden gezeichnet. Das Werkstück 3 ist mit dem Erdpotential von zwei Generatoren 11 verbunden. Das Minuspotential eines jeden Generators ist über Schleifkontakte 2 jeweils mit einem der Elektrodenglieder 8 verbunden. Dadurch können im Schnittbereich gleichzeitig zwei Entladungen zwischen dem Werkstück und der Drahtelektrodenanordnung stattfinden.

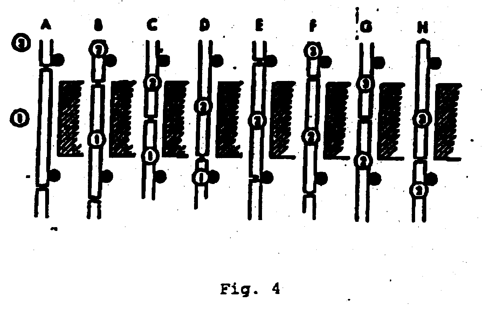

Die Fig. 4 zeigt eine Darstellung des zeitlichen Arbeitsablauf der Anordnung gemäss Fig. 3. Der nach unten gerichtete Bewegungsablauf des Drahtes führt dazu, dass sich zu verschiedenen Zeitpunkten unterschiedlich grosse Längenanteile der über die oberen bzw. unteren Schleifkontakte verbundenen Elektrodenglieder im Schnittbereich befinden. Im Extremfall A befindet sich nur ein einziges Glied in diesem Bereich.

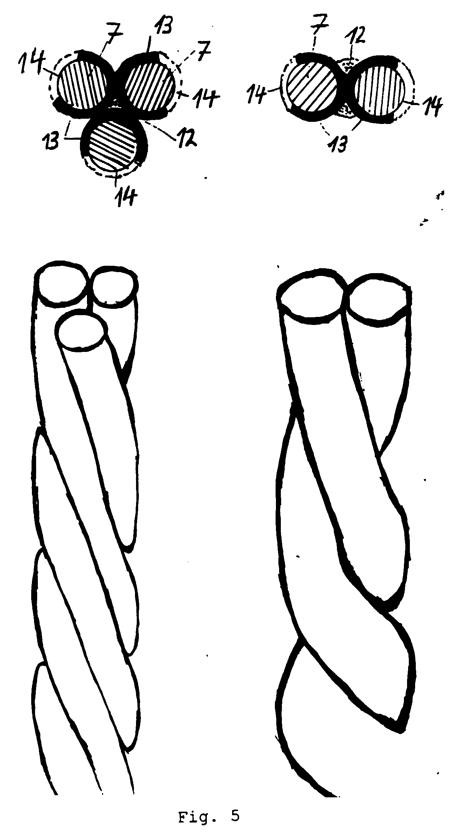

Die Fig. 5 zeigt vergrösserte Ansichten weiterer Ausführungsbeispiele einer erfingungsgemässen Drahtelektrode. Diese umfasst mindestens zwei Elektroden, welche jeweils aus einer leitenden Drahtseele 7 bestehen, welcher mit einer Isolierschicht 13 versehen ist. Die Drähte sind an ihrer Isolierschicht miteinander verbunden, beispielsweise durch Kleber 12. Im rechten Bildbereich ergibt sich für den Fall von zwei Drähten ein Doppeldrahtsystem mit einem achtförmigen Querschnitt. Für den Fall von drei Drähten, wie in der linken Bildhälfte gezeigt, ein kleeblattförmiger Querschnitt. Mittels einer Schabdüse (nicht dargestellt) wurde die isolierende Schicht 13 an bestimmten Umfangsbereichen 14 entfernt, um die gewünschten Entladungbereiche zu schaffen. Diese befinden sich normalerweise an maximal entfernten Positionen der Gesamtanordnung; dies entspricht bei zwei Drähten jeweils derjenigen Drahtseite, welcher der Verbindungsstelle entgegengesetzt ist.

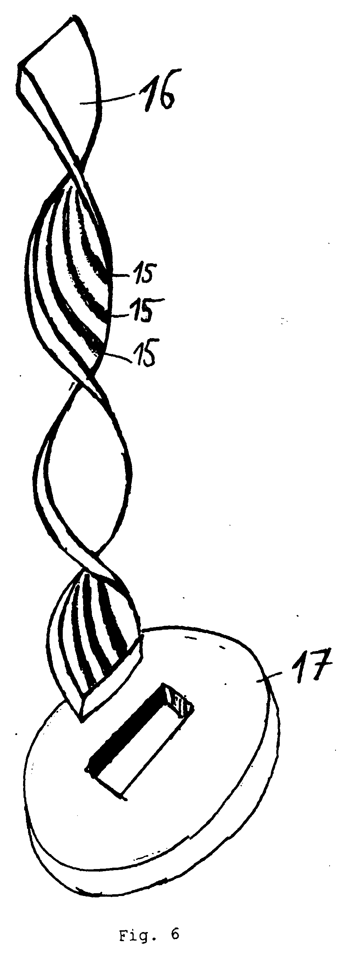

Fig. 6 zeigt eine schematische, perspektivische Ansicht eines Ausführungsbeispiels gemäss Fig. 5 in Form einer Verdrillung eines mit leitenden Streifen 15 beschichteten Bandes 16 . Beim Abwickelvorgang des Bandes von einer Rolle erfolgt die Uebertragung des elektrischen Potentials von verschiedenen Generatoren auf die jeweiligen Streifenelektroden durch entsprechend der Elektrodenkonfiguration angeordneten Schleifkontakten. Eine obere, starre Führung des Bandes verhindert ein Verdrillen des Bandes im Bereich der Schleifkontakte. Für die untere Bandführung wird eine drehbare Lagerung der Führung 17 bevorzugt, wodurch eine Anpassung der Verdrillung bei geänderter Arbeitshöhe durchgeführt werden kann.

Die Erfindung ist nicht auf die gezeigten Ausführungsbeispiele beschränkt, für den Fachmann ergeben sich im Rahmen der Erfindung zahlreiche Modifikations- und Abwandlungsmöglichkeiten.

## Patentansprüche

1. Drahtelektrodenanordnung zum funkenerosiven Schneiden sowie einer elektrischen Schaltung zur Bearbeitungskontrolle, gekennzeichnet durch mindestens eine erste gegen eine zweite gegeneinander isolierte Elektrode, welche eine drahtförmige Anordnung mehrerer Elektroden bilden.

2. Anordnung nach Anspruch 1, dadurch gekennzeichnet, dass die Drahtelektrode aus gliederkettenartigen aus gegeneinander isolierten Segmenten ausgebildet ist.

3. Anordnung nach Anspruch 2, dadurch gekennzeichnet, dass die Segmente aus leitendem Material gefertigt sind.

4. Anordnung nach Anspruch 2, dadurch gekennzeichnet, dass die Seele aus nichtleitendem Material gefertigt ist.

5. Anordnung nach Anspruch 2, dadurch gekennzeichnet, dass die Seele aus leitendem Material gefertigt ist, welches mit einer nichtleitenden Isolationsschicht überzogen ist.

6. Anordnung nach Anspruch 2, gekennzeichnet durch zwei mit verschiedenen Strom- und Spannungsquellen verbundenen Schleifkontakten.

7. Anordnung nach Anspruch 6, dadurch gekennzeichnet, dass der Abstand der Schleifkontakte in etwa demjenigen der Segmentgliederlänge entspricht.

8. Anordnung nach Anspruch 1, dadurch gekennzeichnet, dass die Drahtelektrode aus mindestens zwei gegeneinander isolierten Drähten gefertigt ist, welche im wesentlichen zueinander parallel und gegeneinander verdrillt sind.

9. Anordnung nach Anspruch 8, gekennzeichnet durch eine feste Führung oberhalb des Werkstücks, d.h. auf der Seite, welche beim Ablauf des Drahtes von der Abwickelspule zunächst folgt, und durch eine drehbar gelagerte Führung, welche sich auf der der festen Führung entgegengesetzten Werkstückseite befindet und durch welche eine Verdrillung der Drahtanordnung entsprechend der Werkstückhöhe erzielt wird.

10. Anordnung nach Anspruch 8, gekennzeichnet durch gegeneinander isolierte, jeweils mit einer der Elektroden in Kontakt bringbare Schleifkontakte, welche mit jeweils einer Elektrode mit einer getrennten Strom- und Spannungsquelle verbunden sind.

11. Anordnung nach Anspruch 10, dadurch gekennzeichnet, dass die oberen Schleifkontakte zwischen der Abwickelrolle und der festen Führung angeordnet sind.

12. Anordnung nach Anspruch 10, dadurch gekennzeichnet, dass die unteren Schleifkontakte in Form mehrerer Schleifringe entsprechend der Anzahl der Elektroden drehbar gelagert sind

13. Verfahren zur Herstellung einer Drahtelektrode nach einem der Ansprüche 1 bis 7, dadurch gekennzeichnet, dass elektrisch leitende Beschichtungen gliederförmig auf eine isolierende Drahtseele aufgebracht werden, wobei die einzelnen Glieder gegeneinander isoliert sind.

14. Verfahren zur Herstellung einer Drahtelektrode nach einem der Ansprüche 1 und 8 bis 12, dadurch gekennzeichnet, dass mehrere Drähte von denen alle bis höchstens einen mit einer Isolierschicht versehen sind, miteinander verbunden werden.

15. Verfahren nach einem der Ansprüche 1 und 8 bis 12, dadurch gekennzeichnet, dass mittels einer Schabdüse an den äusseren Bereichen der Drahtelektrode die Isolierschicht der einzelnen Drähte entfernt wird (bevor eine Verdrillung erfolgt)

16. Verfahren nach einem der Ansprüche 1 und 8 bis 12, dadurch gekennzeichnet, dass durch zwischen einer festen Führung und einer drehbar gelagerten Führung eine Verdrillung der Draht anordnung erfolgt.
